Europäisches Patentamt

European Patent Office

Office européen des brevets

(11) Publication number: **0 121 810 B1**

# EUROPEAN PATENT SPECIFICATION

(45) Date of publication of patent specification: **20.05.92**  (51) Int. Cl.⁵: **G06F 3/153**, G09G 1/16

(21) Application number: **84102737.8**

(22) Date of filing: **13.03.84**

(54) **Microprocessor.**

(30) Priority: **14.03.83 JP 41989/83**

(43) Date of publication of application:
**17.10.84 Bulletin  84/42**

(45) Publication of the grant of the patent:
**20.05.92 Bulletin  92/21**

(84) Designated Contracting States:
**DE FR GB**

(56) References cited:
**WO-A-81/03234**        **GB-A- 2 041 705**
**GB-A- 2 072 387**        **GB-A- 2 087 696**
**US-A- 4 270 125**        **US-A- 4 326 202**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Izuta, Satoshi**
**2-5-53, Hesakaooage**
**Higashi-ku, Hiroshima-shi Hiroshima-ken(JP)**
Inventor: **Hayashi, Hiromasa**
**2-20-9, Yuigahama**
**Kamakura-shi Kanagawa-ken(JP)**

(74) Representative: **Henkel, Feiler, Hänzel & Part-
ner**
**Möhlstrasse 37**
**W-8000 München 80(DE)**

## Description

The present invention relates to a microprocessor which, in addition to the original arithmetic operation function, has a function for sending a control signal to a CRT display unit which generates a video signal.

In a conventional system using a microprocessor, a picture signal which is generated from a display control circuit is supplied to a display device such as a cathode ray tube, liquid crystal display device and the like, so that it is displayed.

For such a display device, a CRT display circuit is often used which includes a video RAM as a picture data memory and a hardware for converting its memory contents to a video signal. A video signal obtained in such a CRT display unit is displayed on the CRT. A CRT display unit displays characters, symbols or the like which are obtained by converting data stored in the video RAM in accordance with predetermined codes. Alternatively, the CRT display unit performs graphic displays in a bit image of the data stored in the video RAM.

The CRT frequently used for this purpose displays the image by the raster scan method as in the case of a commercial TV receiver. With such a CRT display unit, horizontal and vertical sync signals are required for controlling the sweeping operation.

In the system using such a microprocessor, a program memory, data memory and video RAM are stored in an address space. The video RAM is directly accessed by the microprocessor. However, in this system, when the capacity of the video RAM is increased, the program and data areas are reduced, which is not ideal. In view of this, it has been proposed to provide an address space for storing the video RAM apart from the address space of the microprocessor. Then, these address spaces are selectively accessed by an address selection signal. In such a system, the CRT display unit must generate a video signal corresponding to the display image, vertical and horizontal sync signals, address selection signals, and so on. The conventional CRT display unit uses a special LSI or a combination of ICs such as TTLs in order to generate a video signal, vertical and horizontal sync signals, address selection signals, and so on. For this reason, in a small scale system, the CRT display unit occupies a large area, the total number of parts is increased, and the manufacturing cost is high.

Prior art document GB-A-2 041 705 discloses a computer system comprising a CPU for providing most data processing by the system under control of a ROM which contains only instructions and other data for the CPU. The system also includes a RAM, a keyboard, a video terminal, and a port device in the form of a tape recorder/player. In this system the CPU generates and controls the video signal by means of a video RAM, a keyboard/video select unit and a video divider chain unit and supplies the video signal to the video terminal, so that this video RAM, keyboard/video select unit and video divider chain unit are provided in addition to the CPU.

It is an object of the present invention to provide a microprocessor which has a circuit which generates an address signal for a video RAM when a display method utilizing the video RAM which is adopted in many CRT display circuits is adopted.

To solve this object the present invention provides a microprocessor as stated in claim 1.

With this invention, the configuration of a CRT display unit can be significantly simplified, and the system cost can be reduced.

This invention can be more fully understood from the following detailed description when taken in conjunction with the accompanying drawings, in which:

Fig. 1 is a block diagram showing the internal configuration of a Z80 microprocessor;

Fig. 2 is a diagram showing the internal of the Z80 microprocessor;

Fig. 3 is a block diagram showing the internal configuration of a microprocessor according to an embodiment of the present invention;

Fig. 4 is a timing chart for explaining the mode of operation of the microprocessor shown in Fig. 3;

Fig. 5 is a block diagram showing an example of a system using the microprocessor shown in Fig. 3;

Fig. 6 is a block diagram showing the configuration of a conventional microprocessor; and

Fig. 7 is a block diagram showing a microprocessor according to another embodiment of the present invention.

The preferred embodiment of the present invention will now be described with reference to the accompanying drawings. The embodiment will be described with reference to a case wherein an 8-bit microprocessor, particularly a Z80 microprocessor has an additional function of generating a control signal to be supplied to a CRT display unit.

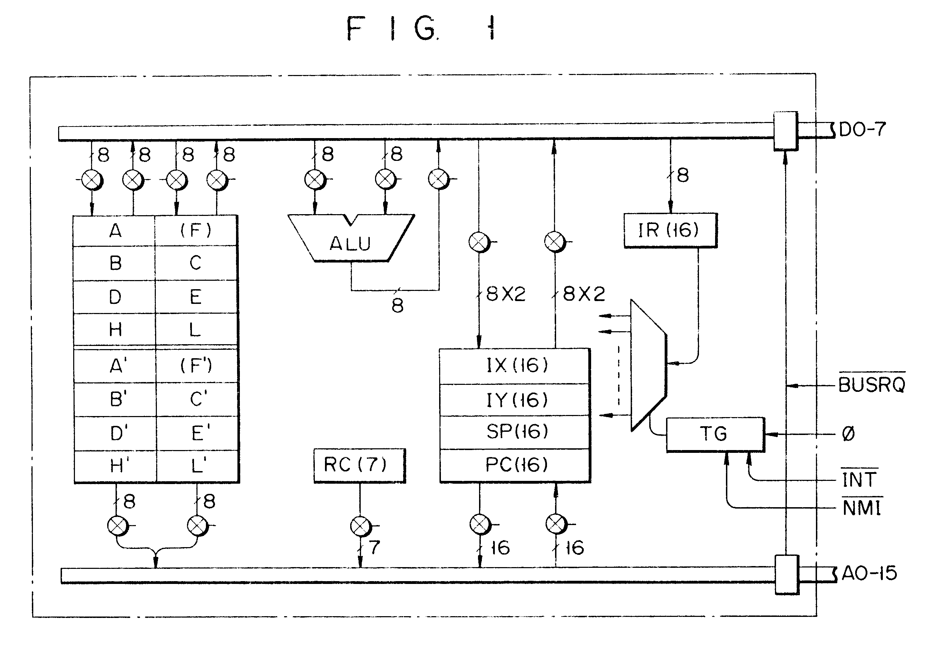

Fig. 1 is a block diagram showing the internal configuration of a Z80 microprocessor. A Z80 microprocessor has 14 8-bit general registers A, B, C, D, E, H, L, A', B', C', D', E', H', and L', an arithmetic and logic unit ALU capable of 8-bit addition/subtraction, shift, and logic operations, 16-bit index registers IX and IY, a stack pointer SP, a program counter PC, and so on. The microprocessor produces 8-bit data signals D0 to D7, 16-bit address signals A0 to A15, and a plurality of control signals for controlling the microprocessor and the system.

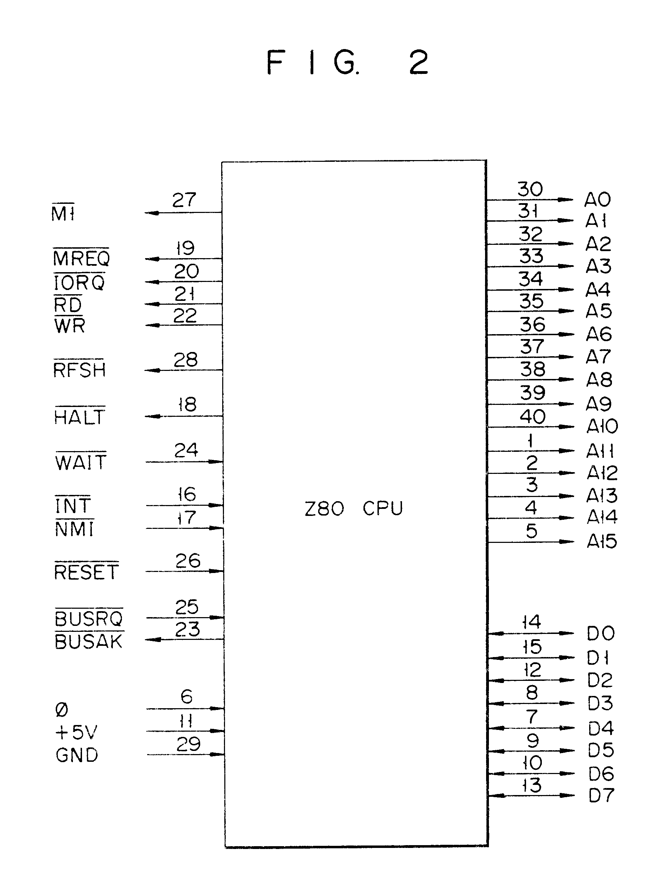

Fig. 2 is a diagram showing signals produced by the Z80 microprocessor. The Z80 microprocessor is seen to produce 16-bit address signals A0 to A15; 8-bit data signals D0 to D7; system control signals $\overline{M1}$, $\overline{MREQ}$, $\overline{IORQ}$, $\overline{RD}$, $\overline{WR}$, and $\overline{RFSH}$; CPU control signals $\overline{HALT}$, $\overline{WAIT}$, $\overline{INT}$, $\overline{NMI}$, and $\overline{RESET}$; and CPU bus control signals $\overline{BUSRQ}$ and $\overline{BUSAK}$. There are other pins for receiving a clock signal $\phi$, a power source voltage +5 V, and ground potential GND. The microprocessor has a total of 40 pins.

The main control signals have the following functions.

$\overline{MREQ}$: The memory request signal indicates that the microprocessor wishes to access (read or write) the memory, and is also used in the refresh cycle.

$\overline{IORQ}$: The I/O request signal indicates that the microprocessor wishes to access (read or write) an I/O, and is also used for an interrupt ackowledge.

$\overline{RD}$: The read signal indicates that the microprocessor wishes to read data from the memory or I/O.

$\overline{WR}$: The write signal indicates that the microprocessor can write data in the memory or I/O.

$\overline{M1}$: This control signal indicates that the microprocessor is in the fetch cycle of the first byte of an operation code, or is used as an interrupt acknowledge signal INTA in synchronism with the I/O request.

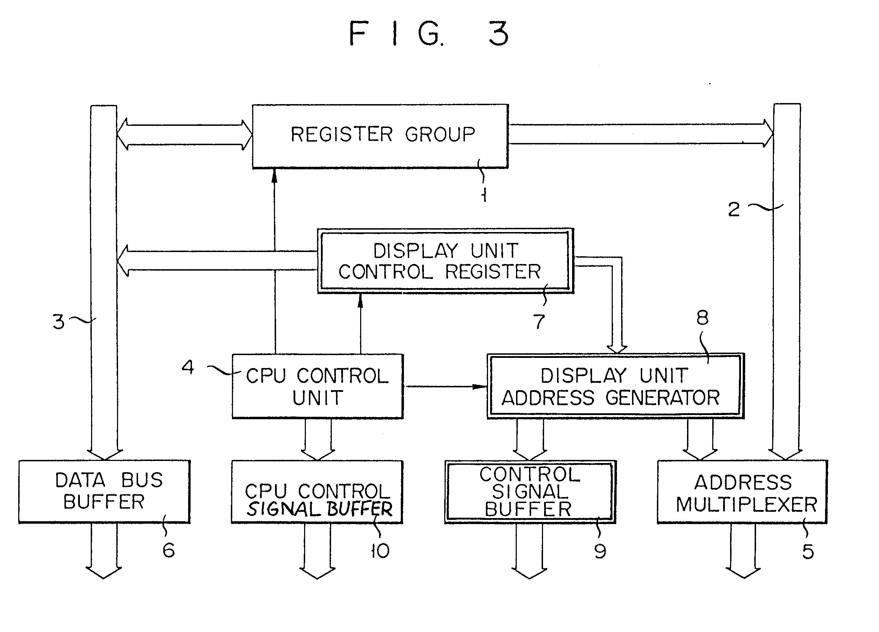

Fig. 3 is a block diagram showing a 1-chip configuration in which a control function of the CRT display unit is added to the Z80 microprocessor. The portion enclosed by double lines in Fig. 3 corresponds to a part added to the Z80 microprocessor. Referring to Fig. 3, reference numeral 1 denotes a register group consisting of the above-mentioned registers, an arithmetic and logic unit, and so on. These registers, the arithmetic and logic unit, etc., are connected to an internal address bus 2 and an internal data bus 3, respectively. The register group 1 is controlled by a CPU control unit 4 in accordance with predetermined functions so as to perform data supply or data fetch through the internal address bus 2 or the internal data bus 3. The contents on the internal address bus 2 and the internal data bus 3 are sent outside the system through an address multiplexer 5 and a data bus buffer 6, respectively.

In the microprocessor of the embodiment described above, a display unit control register 7, a display unit address generator 8, and a control signal buffer 9 are included so as to obtain a control signal for the CRT display unit. The display unit control register 7 generates vertical and horizontal sync signals V-SYNC and H-SYNC, top address of display area and data of addressing range for performing raster scan in a CRT. Provided the frequency of the clock signal $\phi$ is constant, the sync signals can be obtained by frequency-dividing the clock signal $\phi$ by a suitable ratio. If the frequency of the clock signal $\phi$ is indeterminate, a programmable register can be used in which data can be set by means of a program as in the case of the register group 1 and the frequency division ratio can be determined in accordance with such data.

The display unit address generator 8 generates an address of a video RAM at which data to be displayed by the CRT display unit is stored. The display unit address generator 8 can comprise a series circuit of a desired number of binary counters. The respective bits of the count data of the counters are produced in parallel with each other. An address signal for accessing the video RAM and an address signal for producing the data to the internal address bus 2 for execution of the program or the like, which are produced from the display unit address generator 8, are selectively produced outside of the system by the address multiplexer 5. Display status signals are produced through the control signal buffer 9 in order to indicate that the address signal for the video RAM of the CRT display unit is being produced while the address signal is generated by the address generator 8. The sync signals V-SYNC and H-SYNC are produced through the control signal buffer 9. Control signals of the microprocessor are produced outside of the system through a CPU control signal buffer 10.

As has been described earlier, the Z80 microprocessor has a total of 40 pins. However, when an additional function is included as in the case of this embodiment, the number of terminals exceeds 40 due to an increase in the number of signals to process. Accordingly, the original package cannot be used. In this case, since the display status signals and sync signals V-SYNC and H-SYNC need not be generated simultaneously, the system can be packaged with 40 pins without substantially impairing the original functions of the Z80 microprocessor. In other words, detection of the signal $\overline{HALT}$ is performed using the terminal of the signal $\overline{M1}$. First and second display status signals ST1 and ST2 are produced from terminals of signals $\overline{HALT}$ and $\overline{RFSH}$.

A decoder circuit can be used in accordance with the combination of the first and second display status signals so as to define the control signals. When the first and second display control signals ST1 and ST2 are set at "H" and "L" levels, respectively, the corresponding period is determined to be a period wherein the video RAM is accessed. When ST1 = "L" and ST2 = "H", the corresponding period is determined to be a period wherein the vertical sync signal V-SYNC is generated. When ST1 = "L" and ST2 = "L", the corresponding period is determined to be a period wherein the horizontal sync signal H-SYNC is generated.

Although the output of the control signals can be controlled in accordance with the display status signals as described above, it may be performed by generating different types of control signals upon switching the pin function in accordance with a software operation code. Then, the number of different output signals can be increased without requiring an increase in the total number of pins.

In the embodiment described above, a conventional circuit for performing address scanning to display data in the video RAM, and a conventional switching circuit for switching between an address signal from this circuit and an output from the internal address bus 2 at the side of the microprocessor can be omitted. Furthermore, a circuit for generating the sync signals V-SYNC and H-SYNC can also be omitted, so that the overall configuration of the CRT display unit can be simplified. In consequence, the number of parts of the CRT display unit and its cost can also be reduced, and the circuit configuration thereof can be significantly simplified. The area of a printed circuit board for the system can therefore be reduced. In the system of the embodiment described above, switching control between memory access of the video RAM by the microprocessor and memory access for display is performed by the microprocessor itself. Accordingly, noise on the display can be prevented which is caused when access from more than one circuits to a memory is made simultaneously. Without this feature, in order to prevent noise from appearing on the display screen, a sufficient time margin must be allowed for accessing the memory, resulting in a low operation speed. The microprocessor of the present invention does not have such a problem. The microprocessor of the present invention allows display of a high quality image, simplification of circuit configuration and improvement in reliability without decreasing the arithmetic operation speed in the microprocessor.

The present invention is not limited to the embodiment described above. For example, sync signals V-SYNC and H-SYNC can be omitted depending on the circuit configuration. In this case, an address generator for generating an address of the video RAM, and a multiplexer of an address buffer for switching this address signal must be incorporated. With this modification, the CRT display unit can also be simplified, and a CRT of raster scan type as well as other types can be used.

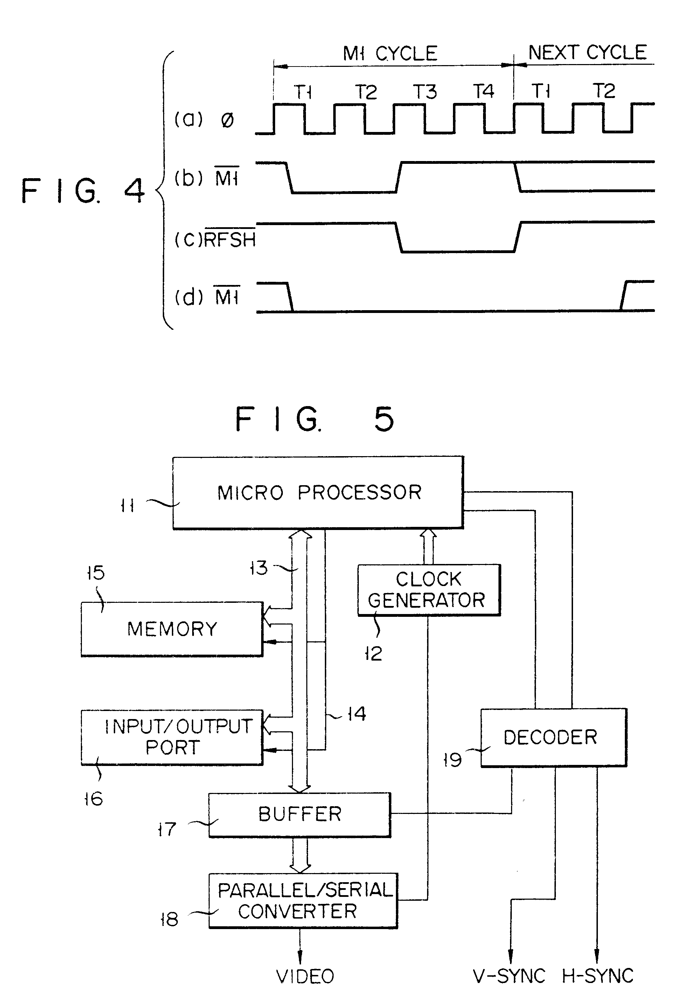

Fig. 5 shows a block diagram of an example of a system using the microprocessor shown in Fig. 3 according to the embodiment of the present invention. Reference numeral 11 denotes a microprocessor; and 12, a clock generator for supplying a clock signal $\phi$ to the microprocessor 11. Data output and address output from the microprocessor 11 are supplied to a memory 15 and an I/O 16 through a data bus 13 and an address bus 14, respectively. The data bus 13 is supplied to parallel input terminals of a parallel-to-serial converter 18 through a buffer 17 having a latch function. The memory 15 stores at least a program for operating the system as a terminal. First and second display status signals ST1 and ST2 of the microprocessor 11 are decoded by a decoder 19 so as to selectively extract vertical and horizontal sync signals V-SYNC and H-SYNC which are supplied to a CRT (not shown). During the output period of the address of the video RAM, data supplied to the data bus 13 is latched in the buffer 17 and is converted into serial signals by the parallel-to-serial converter 18 in synchronism with a signal that is generated from the clock generator 12 so as to obtain a video signal. The video signal is then supplied to the CRT (not shown). Since the address generator for generating the vertical and horizontal sync signals V-SYNC and H-SYNC and the address signal for the video RAM are included in the microprocessor, the system configuration including the CRT display unit can be significantly simplified.

The system configuration can be particularly simplified when the configuration as shown in Fig. 3 is implemented in a 1-chip IC. In the circuit shown in Fig. 5, the microprocessor 11 can be formed on one chip including the clock generator 12, buffer 17, and parallel-to-serial converter 18. Then, the configuration of the overall circuit can be simplified further.

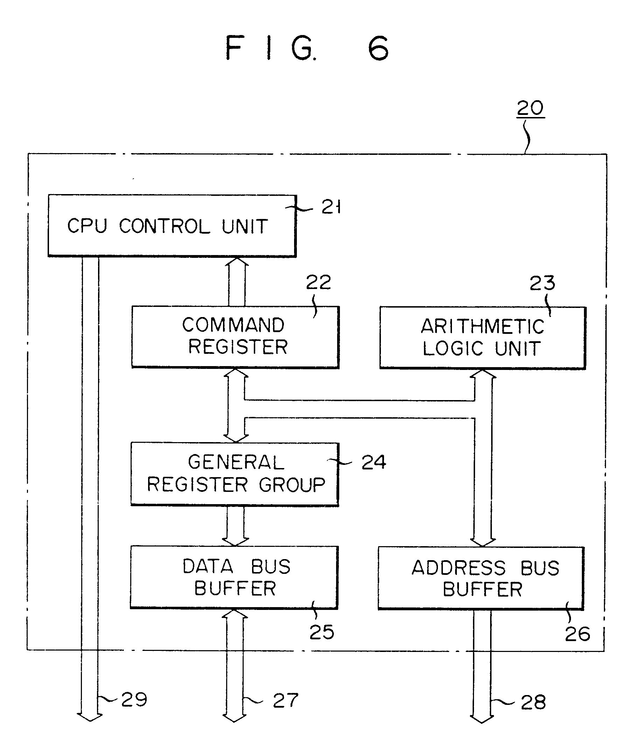

Fig. 6 is a block diagram showing an example of the configuration of a conventional microprocessor 20. The conventional microprocessor 20 comprises, in general, a CPU control unit 21 for controlling the decoding operation of operation codes and overall operation, a command register 22 for temporarily storing a fetched command and supplying it to the CPU control unit 21, an arithmetic and logic unit 23, a general register group 24 for temporarily storing data, a data bus buffer 25, an address bus buffer 26, and the like. Input/output of data is performed through a data bus 27, and an address signal is generated through an address bus 28. The CPU control unit 21 performs input/output of control signals to and from external memories, I/O ports and the like, through a control bus 29.

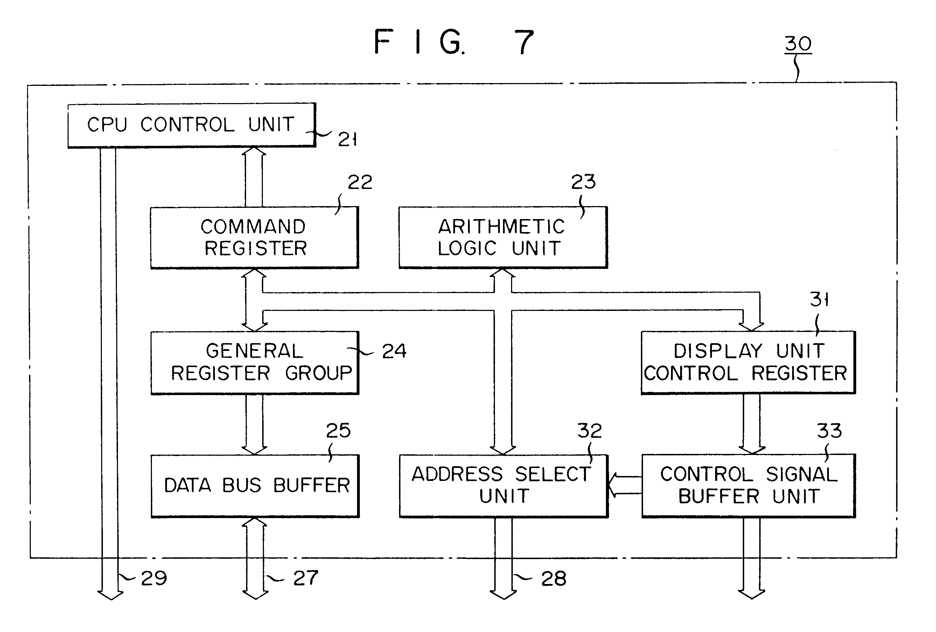

When a control function of the CRT display unit is added to the microprocessor of the configuration as described above, the overall circuit configuration can be as indicated by the block diagram shown in Fig. 7. A microprocessor 30 shown in Fig. 7 has the parts shown in Fig. 6 and a display unit control register 31, an address select unit 32, and a control signal buffer unit 33. The display unit control register 31 supplies an address signal to the video RAM. The address select unit 32 selects one of the address signal from the display unit control register 31 and that from the general register group 24. The address select unit 32 performs address signal switching so that the two types of address signals do not overlap causing noise on the display screen and that the original arithmetic operation of the microprocessor is not interfered with. The control signal buffer unit 33 generates status signals which respectively indicate that the vertical and horizontal sync signals V-SYNC and H-SYNC and the control signal are being produced. The control signal buffer unit 33 also controls the switching of the address signal by the address select unit 32.

In the embodiment described above, the address signal of the video RAM, sync signals V-SYNC and H-SYNC, and the status signals are produced. However, sync signals can be omitted if not required depending upon the particular application.

The circuit configuration shown in Fig. 7 can also include a parallel-to-serial converter which converts data read out from the video RAM to the video signal. In this case, in order to perform image display by the raster scan method, the signal must be converted into a serial signal. However, if display is to be performed with a number of liquid crystal displays, parallel signals can be supplied to these displays. In this case, only a buffer need be included.

In the configuration shown in Fig. 7, a device having a FIFO function can be inserted between the data bus 27 and the parallel-to-serial converter or the buffer and the overall circuit can be formed into a 1-chip IC. In this case, while the data bus 27 is not being used for the original function of the program of the microprocessor, data in the video RAM can be transferred to the device at high speed. Then, a large amount of image data can be transferred at high speed, and the image display function can be improved significantly.

In the configuration shown in Fig. 7, the I/O port as shown in Fig. 5 can be included to form a 1-chip IC.

One or more of the address signals of the video RAM can be used for refreshing a dynamic RAM. The dynamic RAM can be used as a data memory, a program memory or the like used for executing the program. With this configuration, access to the dynamic RAM and refresh operation can be completely separated from each other with respect to time, resulting in stable system operation.

In the configuration shown in Fig. 7, data read out from the video RAM onto the data bus 27 is converted into analog signals by a D/A converter, and image density can be controlled by controlling the level of the video signal.

In order to display a color image, the video signals can be obtained separately as signals R, G and B for colors R (red), G (green) and B (blue). Voltage levels and color combinations of the signals R, G and B can be controlled. The signals R, G and B can be produced as a mixed video signal, or separate video signals.

**Claims**

1. A microprocessor for performing an arithmetic operation in accordance with a predetermined program and controlling a video RAM provided in a display unit, characterized by comprising means (7, 8, 9) for controlling an operation of the RAM, said controlling means (7, 8, 9) including a circuit means for generating a control signal which controls the display unit which generates a video signal for displaying data stored in said video RAM in a form of a corresponding character or bit image.

2. A microprocessor according to claim 1, characterized in that said controlling means (7, 8, 9) include means (7) for generating vertical and horizontal sync signals for displaying on a cathode-ray tube by a raster scan method, means (8) for generating an address signal for accessing the video RAM and means (9) for generating display status signals for indicating an output period of the control signal.

3. A microprocessor according to claim 1, characterized in that said controlling means (7, 8, 9) generate an address signal for accessing a special address space for the video RAM, which is different from an address space in which a memory for executing a program is allocated.

4. A microprocessor according to claim 1, characterized in that said microprocessor is formed on one chip.

**5.** A microprocessor according to claim 3, characterized in that said controlling means (7, 8, 9) include means for performing a refresh operation of a dynamic RAM by using at least a part of said address signal.

**6.** A microprocessor according to claim 1, characterized in that said controlling means (7, 8, 9) include means for converting the display data read out from said video RAM into the video signal.

**7.** A microprocessor according to claim 6, characterized in that said controlling means (7, 8, 9) include a parallel-to-serial converter for converting said display data into a serial video signal.

**8.** A microprocessor according to claim 6, characterized in that said controlling means (7, 8, 9) include means for producing parallel video signals each having a plurality of bits from said display data.

**9.** A microprocessor according to claim 6, characterized in that said controlling means (7, 8, 9) include means for fetching said display data from a data bus while said data bus is not occupied by an arithmetic operation of said microprocessor, and means for sequentially producing the video signals from said display data.

**10.** A microprocessor according to claim 6, characterized in that said controlling means (7, 8, 9) include a digital-to-analog converter for producing a video signal having density information.

**11.** A microprocessor according to claim 6, characterized in that said controlling means (7, 8, 9) include means for generating a video signal having R, G and B signals corresponding to red, green and blue for color display.

**Revendications**

**1.** Microprocesseur pour exécuter une opération arithmétique selon un programme prédéterminé et pour commander une mémoire à accès sélectif RAM vidéo prévue dans une unité de visualisation, caractérisé en ce qu'il comprend des moyens (7,8,9) pour commander une opération de la mémoire RAM, lesdits moyens de commande (7,8,9) incluant un moyen de circuit pour engendrer un signal de commande qui commande l'unité de visualisation générant un signal vidéo pour visualiser des données mémorisées dans ladite mémoire RAM vidéo sous la forme d'un caractère correspondant ou d'une image par points.

**2.** Microprocesseur selon la revendication 1, caractérisé en ce que lesdits moyens de commande (7,8,9) comprennent un moyen (7) pour engendrer des signaux de synchronisation verticale et de synchronisation horizontale pour une visualisation sur un tube à rayons cathodiques TRC par un procédé de balayage récurrent, un moyen (8) pour engendrer un signal d'adresse pour un accès à la mémoire RAM vidéo et un moyen (9) pour engendrer des signaux d'état de visualisation afin d'indiquer une période de sortie du signal de commande.

**3.** Microprocesseur selon la revendication 1, caractérisé en ce que lesdits moyens de commande (7,8,9) engendrent un signal d'adresse pour un accès à un espace-adresses spécial pour la mémoire RAM vidéo, qui est différent d'un espace-adresses attribué à une mémoire servant à l'exécution d'un programme.

**4.** Microprocesseur selon la revendication 1, caractérisé en ce que ledit microprocesseur est formé sur une puce.

**5.** Microprocesseur selon la revendication 3, caractérisé en ce que lesdits moyens de commande(7,8,9) comprennent un moyen pour exécuter une opération de rafraîchissement d'une mémoire RAM dynamique en mettant en oeuvre au moins une partie dudit signal d'adresse.

**6.** Microprocesseur selon la revendication 1, caractérisé en ce que lesdits moyens de commande(7,8,9) comprennent un moyen pour convertir les données de visualisation lues dans ladite mémoire RAM vidéo en signal vidéo.

**7.** Microprocesseur selon la revendication 6, caractérisé en ce que lesdits moyens de commande (7,8,9) comprennent un convertisseur parallèle-série pour convertir lesdites données de visualisation en un signal vidéo en série.

**8.** Microprocesseur selon la revendication 6, caractérisé en ce que lesdits moyens de commande (7,8,9) comprennent un moyen pour produire des signaux vidéo en parallèle comportant chacun une pluralité de bits à partir desdites données de visualisation.

9. Microprocesseur selon la revendication 6, caractérisé en ce que lesdits moyens de commande (7,8,9) comprennent un moyen pour lire lesdites données de visualisation par un bus de données alors que ledit bus de données n'est pas occupé par une opération arithmétique dudit microprocesseur, et un moyen pour produire séquentiellement les signaux vidéo à partir desdites données de visualisation.

10. Microprocesseur selon la revendication 6, caractérisé en ce que lesdits moyens de commande (7,8,9) comprennent un convertisseur numérique-analogique pour produire un signal vidéo comportant des informations de densité.

11. Microprocesseur selon la revendication 6, caractérisé en ce que lesdits moyens de commande (7,8,9) comprennent un moyen pour engendrer un signal vidéo comportant des signaux R,V et B correspondant au rouge, au vert et au bleu pour une visualisation en couleurs.

**Patentansprüche**

1. Mikroprozessor zum Durchführen einer arithmetischen Operation gemäß einem vorbestimmten Programm und zum Steuern eines in einer Anzeigeeinheit vorgesehenen Video-RAM, gekennzeichnet durch eine Einrichtung (7, 8, 9) zum Steuern einer Operation des RAMs, wobei die Steuereinrichtung (7, 8, 9) eine Schaltungseinrichtung hat, um ein Steuersignal zu erzeugen, das die Anzeigeeinheit steuert, die ein Videosignal erzeugt, um in dem Video-RAM gespeicherte Daten in der Form eines entsprechenden Zeichens oder Bitbildes anzuzeigen.

2. Mikroprozessor nach Anspruch 1, dadurch gekennzeichnet, daß die Steuereinrichtung (7, 8, 9) aufweist: eine Einrichtung (7) zum Erzeugen von Vertikal- und Horizontal-Synchronsignalen zum Anzeigen auf einer Kathodenstrahlröhre mittels einer Rasterabtastmethode, eine Einrichtung (8) zum Erzeugen eines Adreßsignales zum Zugreifen auf den Video-RAM und eine Einrichtung (9) zum Erzeugen von Anzeigestatussignalen, um eine Ausgabeperiode des Steuersignales anzuzeigen.

3. Mikroprozessor nach Anspruch 1, dadurch gekennzeichnet, daß die Steuereinrichtung (7, 8, 9) ein Adreßsignal erzeugt, um auf einen speziellen Adreßraum für den Video-RAM zuzugreifen, der von einem Adreßraum verschieden ist, in welchem ein Speicher zum Ausführen eines Programmes gelegen ist.

4. Mikroprozessor nach Anspruch 1, dadurch gekennzeichnet, daß der Mikroprozessor auf einem Chip ausgebildet ist.

5. Mikroprozessor nach Anspruch 3, dadurch gekennzeichnet, daß die Steuereinrichtung (7, 8, 9) eine Einrichtung aufweist, um eine Auffrischoperation eines dynamischen RAMs durchzuführen, indem wenigstens ein Teil des Adreßsignales verwendet wird.

6. Mikroprozessor nach Anspruch 1, dadurch gekennzeichnet, daß die Steuereinrichtung (7, 8, 9) eine Einrichtung aufweist, um die aus dem Video-RAM ausgelesenen Anzeigedaten in das Videosignal umzusetzen.

7. Mikroprozessor nach Anspruch 6, dadurch gekennzeichnet, daß die Steuereinrichtung (7, 8, 9) einen Parallel-Serien-Umsetzer aufweist, um die Anzeigedaten in ein serielles Videosignal umzusetzen.

8. Mikroprozessor nach Anspruch 6, dadurch gekennzeichnet, daß die Steuereinrichtung (7, 8, 9) eine Einrichtung aufweist, um parallele Videosignale, deren jedes eine Vielzahl von Bits hat, aus den Anzeigedaten zu erzeugen.

9. Mikroprozessor nach Anspruch 6, dadurch gekennzeichnet, daß die Steuereinrichtung (7, 8, 9) aufweist: eine Einrichtung zum Abrufen der Anzeigedaten aus einem Datenbus, während der Datenbus nicht durch eine arithmetische Operation des Mikroprozessors belegt ist, und eine Einrichtung zum sequentiellen Erzeugen der Videosignale aus den Anzeigedaten.

10. Mikroprozessor nach Anspruch 6, dadurch gekennzeichnet, daß die Steuereinrichtung (7, 8, 9) einen Digital/Analog-Wandler aufweist, um ein Videosignal mit Dichteinformation zu erzeugen.

11. Mikroprozessor nach Anspruch 6, dadurch gekennzeichnet, daß die Steuereinrichtung (7, 8, 9) eine Einrichtung aufweist, um ein Videosignal mit R-, G- und B-Signalen entsprechend rot, grün und blau für eine Farbanzeige zu erzeugen.

F I G. 1

# F I G. 2

# F I G. 3

FIG. 4

FIG. 5

# F I G. 6

20

CPU CONTROL UNIT — 21

COMMAND REGISTER — 22

ARITHMETIC LOGIC UNIT — 23

GENERAL REGISTER GROUP — 24

DATA BUS BUFFER — 25

ADDRESS BUS BUFFER — 26

— 29

— 27

— 28

# FIG. 7

EP 0 121 810 B1